# EUROPEAN PATENT APPLICATION

(11) **EP 1 930 112 A1**
(43) Date of publication of application: **11.06.2008**
(21) Application number: 06796330.6
(22) Date of filing: 10.08.2006
(51) Int. Cl.: B23K 9/173, B23K 9/16, B23K 9/29

(54) **METHOD OF CONSUMABLE ELECTRODE TYPE GAS SHIELD ARC WELDING AND WELDING TORCH FOR USE THEREIN**

(30) Priority: 11.08.2005 JP 2005232912
(71) Applicant: Taiyo Nippon Sanso Corporation, Shinagawa-ku Tokyo 142-8558 (JP)
(72) Inventor: TAKAHASHI, Makoto, Tokyo 142-8558 (JP); SATO, Toyoyuki, Tokyo 142-8558 (JP); NAKAMURA, Terumi, Tsukuba-shi Ibaraki 305-0047 (JP); HIRAOKA, Kazuo, Tsukuba-shi Ibaraki 305-0047 (JP)
(74) Representative: Lamb, Martin John Carstairs
(86) International application number: PCT/JP2006/315831
(87) International publication number: WO 2007/018265

(57) **Abstract**

The object of the present invention is to provide a consumable electrode-based gas-shielded arc welding method, wherein a shielding gas that includes an inert gas is supplied to a consumable electrode, and an additive gas of a mixed gas that includes an oxidative gas and an inert gas is supplied to a peripheral portion of a molten pool, and a welding torch used therefor. According to the present invention, when a steel material is welded by using a GMA welding method, the concentration of oxygen dissolved in the welded metal can be lowered to 100 ppm or less, the stability of the arc can be maintained, and preferable bead formation can be achieved.

## Description

### TECHNICAL FIELD

The present invention relates to a consumable electrode-based gas-shielded arc welding (Gas-Shielded Metal-Arc Welding, hereinafter, abbreviated as "GMA welding") method and a welding torch used for this welding method. According to the present invention, the concentration of oxygen dissolved in the welded metal can be maintained at an extremely lower level.

Priority is claimed on Japanese Patent Application No. 2005-232912 filed on August 11, 2005, the contents of which are incorporated herein.

### BACKGROUND ART

GMA welding has an advantage in which the deposition rate is higher compared to GTA welding (Gas-Shielded Tungsten-Arc Welding). However, GMA welding has a problem in which the concentration of oxygen dissolved in the welded metal is higher because a mixed gas including an oxidative gas such as oxygen or carbon dioxide, and an inert gas such as argon or helium; or only carbon dioxide is used as a shielding gas in order to maintain stability of the arc. The concentration of oxygen dissolved therein closely correlates to the toughness of the welded metal, and there is a problem in which its toughness becomes inferior when the concentration of oxygen dissolved therein is higher.

In general GMA welding, the concentration of oxygen dissolved in the welded metal indicates 150 ppm or more even at its lowest.

It has been considered that oxygen atoms in the oxidative gas that is included in the shielding gas are carried to the end part of the consumable electrode, the molten globule and the molten pool where the temperature becomes high during welding, and this causes such a higher concentration of oxygen dissolved therein.

As a method of solving such a problem, a GMA welding method is proposed in JP-A-S61-10255, wherein a gas called "arc-stabilizing gas", including an inert gas and an active gas, is supplied to the arc, particularly, to the end part of the consumable electrode (i.e. supplied locally to the center of the arc), and a shielding gas including an inert gas is supplied to the molten pool.

Furthermore, a GMA welding method is disclosed in JP-A-H07-36958, wherein a welding torch having a double nozzle is used, and, in order to reduce weld sputter or the like, carbon dioxide is flowed into the outer nozzle, which is an annular flow channel surrounding the inner nozzle, while an inert gas, or a mixed gas including an inert gas and a small amount of an active gas is flowed into the inner nozzle.

However, in order to stabilize the arc by way of supplying the shielding gas including an inert gas to the inner flow channel, and the additive gas to the outer flow channel, it is required that a large amount of the additive gas be supplied thereto. Consequently, a large amount of oxygen is mixed into the molten pool, and therefore, it is impossible to lower the concentration of oxygen dissolved therein.

The present inventors confirmed that it was difficult to lower the concentration of oxygen dissolved in the welded metal to 100 ppm or less even in these prior-art welding methods.
Patent Document 1: Japanese Examined Patent Application, Publication No. S61-10255
Patent Document 2: Japanese Examined Patent Application, Publication No. H07-36958

### DISCLOSURE OF THE INVENTION

Thus, the problem to be solved by the present invention is to obtain a preferable bead formation where the concentration of oxygen dissolved in the welded metal can be lowered to 130 ppm or less, preferably to 100 ppm or less, and the stability of the arc can be maintained without drifting of the arc and without changes in the arc length when a steel material is welded by the GMA welding method.

That is, to solve the problem, an aspect of the present invention is to provide a consumable electrode-based gas-shielded arc welding method, wherein a shielding gas that includes an inert gas is supplied to a consumable electrode, and an additive gas of a mixed gas that includes an oxidative gas and an inert gas is supplied to a peripheral portion of a molten pool.

In the consumable electrode-based gas-shielded arc welding method of the present invention, it is preferable that the shielding gas be supplied to the vicinity of the end part of the consumable electrode.

In the consumable electrode-based gas-shielded arc welding method of the present invention, it is also preferable that the oxidative gas be oxygen and that the additive gas including 2% to 10% by volume of oxygen be used.

In the consumable electrode-based gas-shielded arc welding method of the present invention, it is also preferable that the oxidative gas be carbon dioxide and that the additive gas including 4% to 20% by volume of carbon dioxide be used.

Furthermore, in the consumable electrode-based gas-shielded arc welding method of the present invention, it is also preferable that the oxidative gas be oxygen and carbon dioxide, and that the additive gas in which the sum of the concentration of carbon dioxide and two-fold of the concentration of oxygen is 4% to 20% by volume be used.

Another aspect of the present invention is to provide a welding torch for the consumable electrode-based gas-shielded arc welding, the welding torch including: a case; a tip body that is provided inside the case; a tip that is connected to the end part of the tip body; and a nozzle that surrounds the tip, wherein a space is provided between the case and the tip body, the end part of the space forms a blast nozzle for the shielding gas, and a plurality of blast pores for the additive gas are provided radially around the end part of the case and inside the nozzle.

According to the present invention, during welding, a region where the amount of oxygen is low is formed in the vicinity of the consumable electrode that becomes a positive electrode, and the oxygen partial pressure of the gas in the vicinity of the arc becomes extremely low. Consequently, the oxygen partial pressure around the end part of the consumable electrode, the molten globule and the molten pool, where it is considered that oxygen is easily dissolved thereto because of the highest temperature, can be maintained at the lower level. Moreover, the additive gas mainly flows outside the arc and reaches the peripheral portion around the molten pool whereby this contributes to the stability of the cathode spot, and the arc is stabilized.

Accordingly, in the GMA welding, the concentration of oxygen dissolved in the welded metal can be controlled at an extremely low level, particularly, at 130 ppm or less, preferably at 100 ppm or less. Moreover, the arc is stabilized, and a preferable bead formation can be achieved.

Furthermore, if the shielding effect against the atmosphere is insufficient, nitrogen, which causes deterioration of the welding quality such as internal defects, is mixed into the welded metal. However, in the present invention, the concentration of the dissolved nitrogen can also be lowered to 80 ppm or less, preferably 60 ppm or less, and the shielding effect against the atmosphere can be reliably achieved.

### BRIEF DISCRIPTION OF THE DRAWINGS

Figure 1 is a cross-section which illustrates one example of the welding torch of the present invention with respect to its main body.
Figure 2 is a longitudinal section which illustrates one example of the welding torch of the present invention with respect to its main body.
Figure 3 is a simulation diagram which shows the concentration distribution of oxygen gas contained in gas inside the torch of the present invention.
Figure 4 is schematic diagram which shows the flow of the shielding gas and the additive gas in the present invention.
Figure 5 is a graph which shows a suitable range of the flow rate of the additive gas and the shielding gas in the present invention with respect to Examples.

The reference numeral "1" refers to a case; the reference numeral "2" refers to a shielding gas flow channel (space); the reference numeral "3" refers to a tip body; the reference numeral "4" refers to a tip; the reference numeral "5" refers to a wire; the reference numeral "6" refers to a base material; the reference numeral "7" refers to a gas pathway; the reference numeral "8" refers to blast pores; the reference numeral "9" refers to a nozzle; the reference numeral "10" refers to a supply pipe; and the reference numeral "11" refers to a blast nozzle.

### BEST MODE FOR CARRYING OUT THE INVENTION

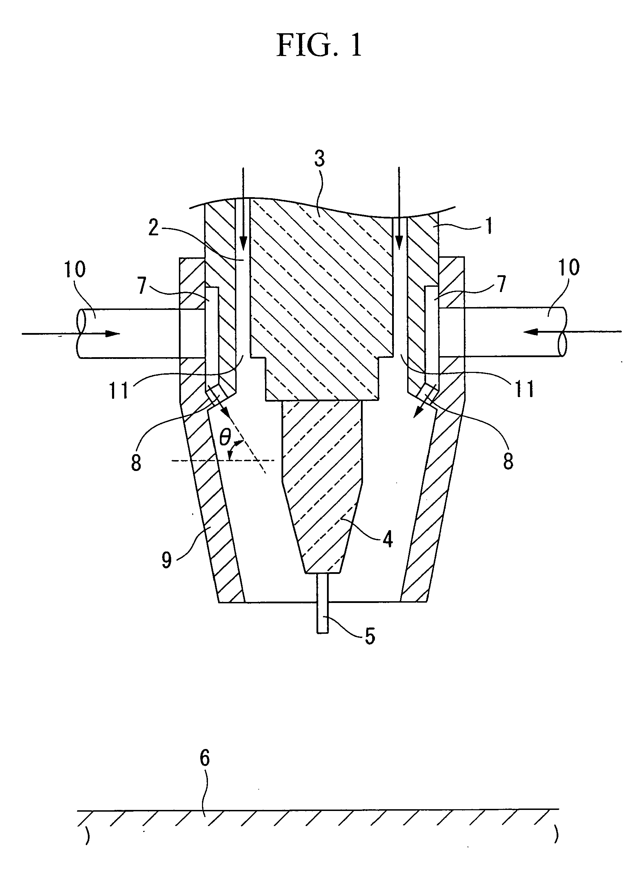

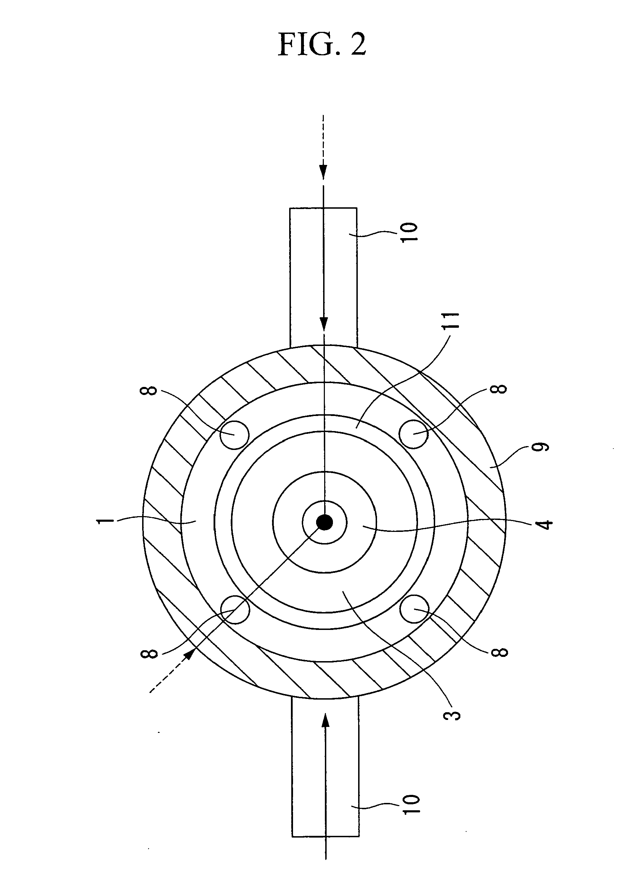

Figures 1 and 2 show one example of the welding torch of the present invention. Figure 1 is a cross-section which refers to the section shown with a broken line in Figure 1.

In the figures, the reference numeral "1" shows a case. The case 1 is a metal member that is shaped into a cylinder having a hollow inside. A tip body 3 is installed inide the case 1 such that a space 2 is provided therein, and the tip body 3 is connected to the main body of the torch.

The space 2 forms a shielding gas flow channel 2 where a shielding gas as described below flows, and the space thereof may be made about 1.5 mm.

The tip body 3 is a metal member that is shaped into a circular bar, and a detachable tip 4 is connected concentrically to the end part of the tip body 3. The tip 4 is also a metal member that is shaped into a circular bar, and the diameter thereof is gradually reduced in the direction to the end part thereof where its shape is tapered.

A pathway having a small diameter is formed in the center of the tip body 3 and the tip 4 where the pathway runs through these members. A wire 5, namely a consumable electrode, is inserted into the pathway whereby the wire can be fed through the pathway. The arc is blown from the end part of the wire 5 to a base material 6.

The wire 5 is fed from the feeding reel not shown in the figures, passes through the pathway inside the tip body 3 and tip 4, and is continuously discharged at a predetermined feeding speed.

Gas pathways 7 for the additive gas are formed in the vicinity of the end part of the case 1. A portion of the peripheral area of the case 1 is cut to form a circular groove, thereby forming the gas pathway 7.

The bottom of the cylinder-like gas pathway 7 is connected to four blast pores 8 from which the additive gas is discharged.

The blast pores 8 are cylinder-shaped penetrating pores, are formed radially on the end plane of the case 1 at uniform intervals, and are inclined such that their longitudinal axes face the end part of the tip 4. In this example, as shown in Figure 1, the angle θ where the axis of the blast 8 and the horizontal line cross is made to be 63° to 69°.

Moreover, a nozzle 9 is connected to the end portion of the case 1. The nozzle 9 is a metal member having a cylinder-like shape, the nozzle surrounds the tip 4, and the diameter thereof is gradually reduced in the direction to the end part thereof where its shape is tapered.

Furthermore, two additive gas supply pipes are connected to the ground part of the nozzle 9.

An additive gas described below is injected into the additive gas supply pipes 10, the injected additive gas passes through the gas pathway 7, and the additive gas is discharged from four blast pores 8.

The end part of the shielding gas flow channel 2 between the case 1 and the tip body 3 forms a blast nozzle 11 that is shaped into a cylinder and is provided concentrically to the wire 5. The end part of the nozzle 9 extends downward ahead of the tip 4, and the end part of the tip 4 is concealed inside the end part of the nozzle 9.

Next, a GMA welding method using the above-described welding torch is explained below.

A shielding gas including an inert gas such as argon or helium is flowed into the shielding gas flow channel 2 in the welding torch, and this is discharged from the blast nozzle 11.

Simultaneously, an additive gas is flowed through the supply pipe 10, passed through the gas pathway 7, and this is discharged from the four blast pores 8.

A mixed gas that includes an oxidative gas containing an oxygen atom such as oxygen or carbon dioxide; and an inert gas such as argon or helium is used as the additive gas. When the oxidative gas is oxygen, the concentration of oxygen in the mixed gas may be adjusted to 2% to 10% by volume, more preferably 3% to 7% to by volume. If the concentration is under 2% by volume, the stability of the arc can not be obtained. When the concentration is above 10% by volume, the concentration of oxygen dissolved in the welded metal becomes higher, thereby exhibiting deficiencies.

When the oxidative gas is carbon dioxide, the concentration thereof in the mixed gas may be adjusted to 4% to 20% by volume, more preferably 6% to 14% by volume. If the concentration is under 4% by volume, then, the arc cannot be stabilized. If the concentration is above 20% by volume, then, the concentration of oxygen dissolved in the welded metal becomes higher.

Moreover, when the mixed gas including oxygen and carbon dioxide as an oxidative gas, the sum of the two-fold of the concentration of oxygen and the concentration of carbon dioxide is adjusted to 4% to 20% by volume. If the sum is under 4% by volume, then, the arc cannot be stabilized. If the sum is above 20% by volume, then, the concentration of oxygen dissolved in the welded metal becomes higher.

The flow rate of the shielding gas may be set to a generally-adopted flow rate, and may be set preferably within a range of 15 to 30 L/minute. If the flow rate is under 15 L/minute, it will cause a shielding deficiency, and therefore such a range may be insufficient. If the flow rate exceeds 30L/minute, then, the flow of the shielding gas will be excessively disrupted, and this results in dragging the atmosphere thereto. Furthermore, the flow rate of the additive gas may be appropriately adjusted depending on the concentration of the oxidative gas in the additive gas, and the flow rate of the shielding gas. However, the flow rate thereof can be adjusted within a range of 1 to 10 L/minute in general. If the flow rate is under 1 L/minute, then, the effect of the additive gas cannot be reliably achieved, and it may be difficult to control the flow rate. If the flow rate exceeds 10 L/minute, then, the dynamic pressure of the additive gas becomes excessively high causing defects of the bead shape or disturbing the shielding condition, and therefore, such a range will be inappropriate. As a standard, it is preferable that the flow rate of the shielding gas and the flow rate of the additive gas be adjusted within a range of (the flow rate of the additive gas)/(the flow rate of the shielding gas + the flow rate of the additive gas) ≤ 0.3.

The preferable flow rates of the shielding gas and the additive gas will influence each other, and also, they will be influenced by the amount of the oxidative gas added to the additive gas. Specifically, if the amount of the oxidative gas in the additive gas is increased, the flow rate of the additive gas may be small.

Furthermore, the flow rates will also be influenced by the cross-sectional area of the opening of the blast pore 8 for the additive gas. It may be necessary for the additive gas to flow out while spreading by making the cross-sectional area of the opening large to some extent.

The angle of the blast pore 8 for the additive gas depends on the shape of the nozzle 9. When the diameter of the end part of the nozzle 9 is reduced more than those shown in Figure 1, the additive gas will flow along the inner wall of the nozzle 9 even if the angle is set to about 90°, and the additive gas flows to the peripheral portion of the molten pool as a result.

In this case, the same effects obtained when the angle of the blast pores is made large can be obtained.

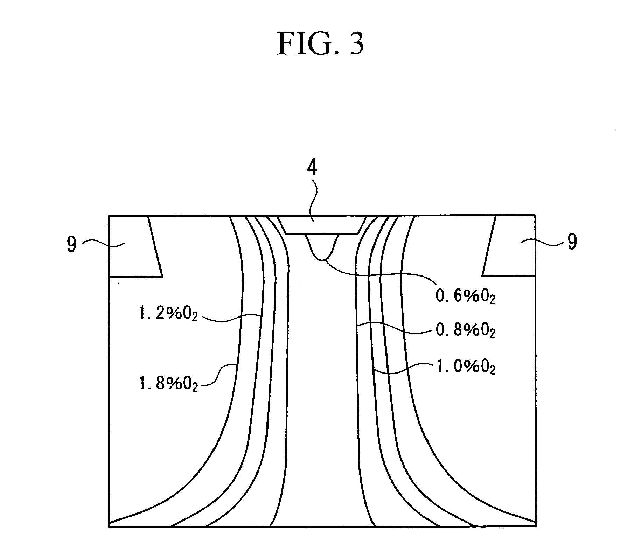

Figure 3 is a simulation diagram which shows the concentration distribution of oxygen gas contained in the gas inside the torch of the present invention, the result being based on the shielding gas flow rate of 20 L/minute, the additive gas composition including 7% of oxygen, and the balance being argon, and the additive gas flow rate of 3 L/minute is shown.

It is clear that the concentration of oxygen in the gas present around the central portion of the torch where the consumable electrode and the arc are present is suppressed at the lower level, and that a large amount of oxygen gas is contained in the gas present outward adjacent to the peripheral portion of the molten pool. In the present invention, the simulation was conducted in various conditions, and the optimum ranges were selected with respect to the additive gas composition, the optimum flow rates of the shielding gas and the additive gas, and also, the optimum blast pores 8 for the additive gas are selected, among others.

Subsequently, the wire 5 is fed at a feeding speed of 4500 to 15000 mm/minute, and, simultaneously, a voltage of direct current 15 to 40 V is applied between the wire 5 and the base material 6, and welding is conducted by arc blowing from the wire 5.

General steel products can be used as a base material 6. For example, carbon steel, low carbon steel, stainless steel or the like can be used. Among others, a solid wire whose diameter is about 1.0 mm to 1.6 mm can be used as the wire 5.

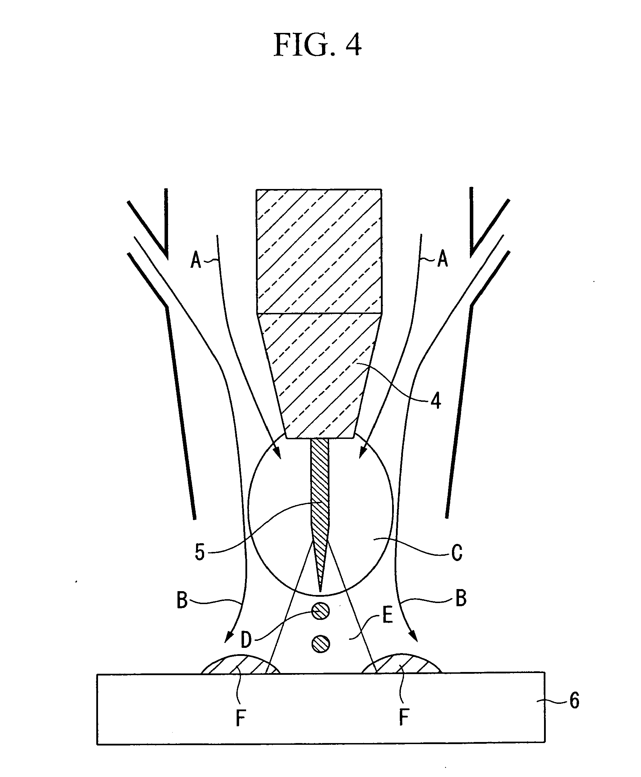

In this way, the shielding gas and the additive gas are blown from the welding torch whereby the gas flow as schematically shown in Figure 4 is generated.

The inside of the nozzle is filled with the shielding gas A discharged from the blast nozzle 11, and the shielding gas A flows as it encloses the tip and the wire 5 that becomes a positive electrode. The additive gas B that flows from four blast pores 8 is influenced by the flow of the shielding gas A that flows as it encloses the tip, the wire 5 that functions as a positive electrode, and the arc E, and consequently flows along the outer side of the arc E to the base material 6. The small amount of the oxidative gas contained in the additive gas B flows as it is present in the vicinity of the outer side of the shielding gas, and reaches the peripheral portion of the molten pool where a cathode spot is formed. Consequently, the region C between the end part of the tip 4 and the end part of the wire 5 becomes a space where oxygen is hardly present.

The molten globule D that is generated from fusion of the wire 5 also includes no oxygen, the molten globule is dropped through the arc E in such a state, and a molten pool is formed in the base material 6. Therefore, the metal that forms the molten pool also includes no oxygen.

On the other hand, the oxidative gas that is supplied only to the peripheral portion of the molten pool shown as "region F" stabilizes the cathode spot. Consequently, the concentration of oxygen dissolved in the welded metal can be maintained at an extremely low value of 130 ppm or less while the stability of the arc can also be maintained.

### Examples

Hereinafter, Examples will be described.

The welding torch shown in Figures 1 and 2 was used, a low carbon steel "JIS SM490A" (12 mm thick) was used as the base material 6, and the wire 5 ("JIS YGW15" having diameter of 1.2 mm) was used as the consumable electrode to conduct the GMA welding. The concentration of oxygen in the base material was 19 ppm, the concentration of nitrogen therein was 54 ppm. The concentration of oxygen in the wire was 31 ppm, and the concentration of nitrogen therein was 33 ppm.

The space of the blast nozzle 11 for the shielding gas in the welding torch was 1.5 mm; the angle θ was 66°; the diameter of the nozzle opening was 18.5 mm; the distance between the end part of the tip and the end part of the nozzle opening was 4 mm; and four blast pores for the additive gas were provided therein, the diameter of their opening was 1.8 mm, the cross-sectional area of the opening was 2.55 mm², and the blast pores were radially disposed therein.

The welding conditions were as follow.

The welding method: GMA welding
The distance between the tip and the base material: 19 mm
The angle of the torch: vertical
The welding position: flat position
The weld length: 130 mm
The joint geometry: Bead-on-plate welding
The wire-feeding rate: 13500 mm/minute (about 350A to 380A)
The arc voltage: low limit voltage of spray transfer + 1 V
The welding speed: 450 mm/minute

Under the above-described conditions, types of additive gas, the flow rate of the additive gas, and the flow rate of the shielding gas were varied, and the stability of the arc, the appearance of the bead, the concentration of the dissolved oxygen, and the concentration of the dissolved nitrogen were evaluated.

With regard to stability of the arc, the evaluation was conducted based on visual inspection and the form of the current-voltage wave observed during welding. That is, if the arc or the wave form was continuously stable from start to finish of welding, it was evaluated as "excellent". If the arc or the wave form fluctuated temporarily when welding is started or finished, it was evaluated as "good". If the arc or the wave form continuously fluctuated other than the above-described case, it was evaluated as "inferior".

The bead appearance was evaluated based on visual inspection. If the toe of the weld (the boundaries between the cross-directional sides of the bead and the base material) was linearly arranged, it was evaluated as "excellent". If it was slightly distorted, it was evaluated as "good". If it was very distorted, it was evaluated as "inferior".

The concentration of the dissolved oxygen was obtained by measuring the concentration of oxygen in the welded part of the metal after welding according to an inert gas-fusion infrared-absorbing analysis method (JIS H1620). The concentration of the dissolved nitrogen was obtained by measuring the concentration of nitrogen in the welded part of the metal after welding according to an inert gas-fusion thermal conductimetry (JIS G1228).

When the concentration of the dissolved oxygen was 100 ppm or less, it was graded as "excellent". When the concentration was more than 100 ppm to 130 ppm, it was graded as "good". When the concentration was more than 130 ppm, it was graded as "inferior". On the other hand, when the concentration of the dissolved nitrogen was 60 ppm or less, it was graded as "excellent". When the concentration was more than 60 ppm to 80 ppm, it was graded as "good". When the concentration was more than 80 ppm, it was graded as "inferior".

The overall evaluation was conducted as follows. When the above-described criteria were all rated as "excellent", the overall rating was "excellent". When "inferior" was not present, but at least one "good" was present, this was evaluated as "good". When at least one "inferior" was present, this was evaluated as "inferior".

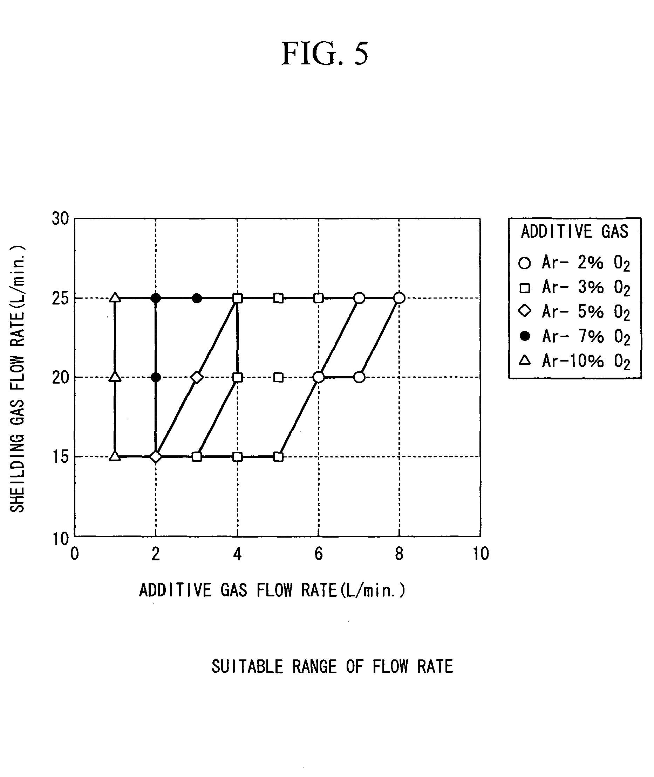

The results are shown in Tables 1 to 5.
In addition, suitable flow rate ranges of the additive gas and the shielding gas obtained based on the results of the above-described overall evaluation are shown in the graph of Figure 5. The suitable flow rate ranges shown in Figure 5 were obtained by plotting those which exhibited "excellent" or "good" in the overall evaluation with respect to each additive gas (Tables 1 to 5). When the plotted position was identical among the additive gases, those having a lower concentration of oxygen were plotted.

**Table 1**

| Additive gas: Ar-2%O₂ | | | | | | | | | | |
|---|---|---|---|---|---|---|---|---|---|---|
| Shielding gas flow rate | Evaluation basis | Additive gas flow rate | | | | | | | | |
| | | 1 L/min. | 2 L/min. | 3 L/min. | 4 L/min. | 5 L/min. | 6 L/min. | 7 L/min. | 8 L/min. | 9 L/min. |
| Ar: 15 L/min. | Arc stability | | | Inferior | Excellent | Excellent | Excellent | Excellent | Excellent | |
| | Bead appearance | | | Inferior | Inferior | Excellent | Excellent | Excellent | Excellent | |
| | Concentration of oxygen | | | | | Excellent | Excellent | Excellent | Good | |
| | Concentration of nitrogen | | | | | Inferior | Inferior | Inferior | Inferior | |
| | Overall evaluation | | | Inferior | Inferior | Inferior | Inferior | Inferior | Inferior | |
| Ar: 20 L/min. | Arc stability | | | | | Inferior | Excellent | Excellent | Excellent | Excellent |
| | Bead appearance | | | | | Inferior | Good | Good | Excellent | Excellent |
| | Concentration of oxygen | | | | | | Excellent | Excellent | Excellent | Excellent |
| | Concentration of nitrogen | | | | | | Excellent | Excellent | Inferior | Inferior |
| | Overall evaluation | | | | | Inferior | Good | Good | Inferior | Inferior |
| Ar: 25 L/min. | Arc stability | | | | | Excellent | Excellent | Excellent | Excellent | Excellent |
| | Bead appearance | | | | | Inferior | Inferior | Good | Good | Excellent |
| | Concentration of oxygen | | | | | | Excellent | Excellent | Excellent | Excellent |
| | Concentration of nitrogen | | | | | | Excellent | Excellent | Excellent | Inferior |
| | Overall evaluation | | | | | Inferior | Inferior | Good | Good | Inferior |

**Table 2**

| Additive gas: Ar-3%O₂ | | | | | | | | | | |
|---|---|---|---|---|---|---|---|---|---|---|
| Shielding gas flow rate | Evaluation basis | Additive gas flow rate | | | | | | | | |
| | | 1 L/min. | 2 L/min. | 3 L/min. | 4 L/min. | 5 L/min. | 6 L/min. | 7 L/min. | 8 L/min. | 9 L/min. |
| Ar: 15 L/min. | Arc stability | | Excellent | Excellent | Excellent | Excellent | Excellent | | | |
| | Bead appearance | | Inferior | Good | Good | Excellent | Excellent | | | |
| | Concentration of oxygen | | | Excellent | Excellent | Excellent | Excellent | | | |
| | Concentration of nitrogen | | | Excellent | Excellent | Excellent | Inferior | | | |
| | Overall evaluation | | Inferior | Good | Good | Excellent | Inferior | | | |
| Ar: 20 L/min. | Arc stability | | | Excellent | Excellent | Excellent | Excellent | Excellent | Excellent | Excellent |
| | Bead appearance | | | Inferior | Good | Good | Excellent | Excellent | Excellent | Excellent |
| | Concentration of oxygen | | | | Excellent | Excellent | Excellent | Excellent | Excellent | Excellent |
| | Concentration of nitrogen | | | | Excellent | Excellent | Excellent | Inferior | Inferior | Inferior |
| | Overall evaluation | | | Inferior | Good | Good | Excellent | Inferior | Inferior | Inferior |
| Ar: 25 L/min. | Arc stability | | | Excellent | Excellent | Excellent | Excellent | Excellent | Excellent | Excellent |
| | Bead appearance | | | Inferior | Good | Good | Excellent | Excellent | Excellent | Excellent |
| | Concentration of oxygen | | | | Excellent | Excellent | Excellent | Excellent | Excellent | Excellent |
| | Concentration of nitrogen | | | | Excellent | Excellent | Excellent | Excellent | Good | Inferior |
| | Overall evaluation | | | Inferior | Good | Good | Excellent | Excellent | Good | Inferior |

**Table 3**

| Additive gas: Ar-5%O₂ | | | | | | | | | | |
|---|---|---|---|---|---|---|---|---|---|---|
| Shielding gas flow rate | Evaluation basis | Additive gas flow rate | | | | | | | | |
| | | 1 L/min. | 2L/min. | 3L/min. | 4L/min. | 5L/min. | 6 L/min. | 7L/min. | 8 L/min. | 9 L/min. |
| Ar: 15 L/min*.* | Arc stability | Good | Good | Excellent | Excellent | Excellent | Excellent | | | |
| | Bead appearance | Inferior | Excellent | Excellent | Excellent | Excellent | Excellent | | | |
| | Concentration of oxygen | | Excellent | Excellent | Excellent | Good | Inferior | | | |
| | Concentration of nitrogen | | Good | Excellent | Excellent | Excellent | Excellent | | | |
| | Overall evaluation | Inferior | Good | Excellent | Excellent | Good | Inferior | | | |
| Ar: 20 L/min. | Arc stability | | Inferior | Excellent | Excellent | Excellent | Excellent | Excellent | | |
| | Bead appearance | | Inferior | Good | Excellent | Excellent | Excellent | Excellent | | |
| | Concentration of oxygen | | | Excellent | Excellent | Excellent | Excellent | Inferior | | |
| | Concentration of nitrogen | | | Excellent | Excellent | Excellent | Excellent | Excellent | | |
| | Overall evaluation | | Inferior | Good | Excellent | Excellent | Excellent | Inferior | | |
| Ar: 25 L/min. | Arc stability | | | Excellent | Excellent | Excellent | Excellent | Excellent | Excellent | |
| | Bead appearance | | | Inferior | Excellent | Excellent | Excellent | Excellent | Excellent | |
| | Concentration of oxygen | | | | Excellent | Excellent | Good | Good | Inferior | |
| | Concentration of nitrogen | | | | Excellent | Excellent | Excellent | Excellent | Excellent | |
| | Overall evaluation | | | Inferior | Excellent | Excellent | Good | Good | Inferior | |

**Table 4**

| Additive gas: Ar-7%O₂ | | | | | | | | | | |
|---|---|---|---|---|---|---|---|---|---|---|
| Shielding gas flow rate | Evaluation basis | Additive gas flow rate | | | | | | | | |
| | | 1 L/min. | 2L/min. | 3L/min. | 4L/min. | 5L/min. | 6L/min. | 7 L/min. | 8L/min. | 9L/min. |
| Ar: 15 L/min. | Arc stability | Good | Excellent | Excellent | Excellent | Excellent | Excellent | | | |
| | Bead appearance | Inferior | Excellent | Excellent | Excellent | Excellent | Excellent | | | |
| | Concentration of oxygen | | Excellent | Good | Good | Good | Inferior | | | |
| | Concentration of nitrogen | | Excellent | Excellent | Excellent | Good | Good | | | |
| | Overall evaluation | Inferior | Excellent | Good | Good | Good | Inferior | | | |
| Ar: 20 L/min. | Arc stability | Inferior | Excellent | Excellent | Excellent | Excellent | Excellent | | | |
| | Bead appearance | Inferior | Excellent | Excellent | Excellent | Excellent | Excellent | | | |
| | Concentration of oxygen | | Excellent | Excellent | Excellent | Good | Inferior | | | |
| | Concentration of nitrogen | | Excellent | Excellent | Excellent | Excellent | Excellent | | | |
| | Overall evaluation | Inferior | Excellent | Excellent | Excellent | Good | Inferior | | | |
| Ar: 25 L/min. | Arc stability | Inferior | Excellent | Excellent | Excellent | Excellent | Excellent | Excellent | | |
| | Bead appearance | Inferior | Good | Excellent | Excellent | Excellent | Excellent | Excellent | | |
| | Concentration of oxygen | | Excellent | Excellent | Excellent | Good | Good | Inferior | | |
| | Concentration of nitrogen | | Excellent | Excellent | Excellent | Excellent | Excellent | Excellent | | |
| | Overall evaluation | Inferior | Good | Excellent | Excellent | Good | Good | Inferior | | |

**Table 5**

| Additive gas: Ar-10%O₂ | | | | | | | | | | |
|---|---|---|---|---|---|---|---|---|---|---|
| Shielding gas flow rate | Evaluation basis | Additive gas flow rate | | | | | | | | |
| | | 1 L/min. | 2 L/min. | 3 L/min. | 4 L/min. | 5 L/min. | 6 L/min. | 7 L/min. | 8 L/min. | 9 L/min. |
| Ar: 15 L/min. | Arc stability | Excellent | Excellent | Excellent | Excellent | | | | | |
| | Bead appearance | Excellent | Excellent | Excellent | Excellent | | | | | |
| | Concentration of oxygen | Excellent | Good | Inferior | Inferior | | | | | |
| | Concentration of nitrogen | Excellent | Excellent | Excellent | Excellent | | | | | |
| | Overall evaluation | Excellent | Good | Inferior | Inferior | | | | | |
| Ar: 20 L/min. | Arc stability | Excellent | Excellent | Excellent | Excellent | Excellent | | | | |
| | Bead appearance | Excellent | Excellent | Excellent | Excellent | Excellent | | | | |
| | Concentration of oxygen | Excellent | Excellent | Good | Good | Inferior | | | | |
| | Concentration of nitrogen | Excellent | Excellent | Excellent | Excellent | Excellent | | | | |
| | Overall evaluation | Excellent | Excellent | Good | Good | Inferior | | | | |
| Ar: 25 L/min. | Arc stability | Excellent | Excellent | Excellent | Excellent | Excellent | Excellent | | | |
| | Bead appearance | Good | Excellent | Excellent | Excellent | Excellent | Excellent | | | |
| | Concentration of oxygen | Excellent | Excellent | Excellent | Good | Good | Inferior | | | |
| | Concentration of nitrogen | Excellent | Excellent | Excellent | Excellent | Excellent | Excellent | | | |
| | Overall evaluation | Good | Excellent | Excellent | Good | Good | Inferior | | | |

Based on the above-described results, it was evident, as shown in Figure 5, that the concentration of oxygen dissolved in the welded metal be preferably adjusted to 130 ppm or less, and the preferable ranges, where drifting of the arc or fluctuation in the arc length was not present and where the stability of the arc could be maintained, were found with respect to the flow rates of the shielding gas and the additive gas, and the addition amount of the oxidative gas.

In addition, the results shown in Tables 1 to 5 or Figure 5 will vary with the above-described welding conditions or specifications of the torch used therein.

### INDUSTRIAL APPLICABILITY

According to the consumable electrode-based gas-shielded arc welding method of the present invention, and the welding torch used therefor, the amount of oxygen dissolved in the welded metal can be suppressed at an extremely lower level whereby preferable bead formation can be achieved. As a result, the present invention can provide high-quality welding and weldment thereof without impairing ductility of the welded metal. Thus, the present invention has high industrial applicability.

## Claims

1. A consumable electrode-based gas-shielded arc welding method, wherein a shielding gas that includes an inert gas is supplied to a consumable electrode, and an additive gas of a mixed gas that includes an oxidative gas and an inert gas is supplied to a peripheral portion of a molten pool.

2. The consumable electrode-based gas-shielded arc welding method according to Claim 1, wherein the shielding gas is supplied to the vicinity of an end part of the consumable electrode.

3. The consumable electrode-based gas-shielded arc welding method according to Claim 1 or 2, wherein the oxidative gas is oxygen, and the additive gas that contains 2% to 10% by volume of the oxygen is used.

4. The consumable electrode-based gas-shielded arc welding method according to Claim 1 or 2, wherein the oxidative gas is carbon dioxide, and the additive gas that contains 4% to 20% by volume of the carbon dioxide is used.

5. The consumable electrode-based gas-shielded arc welding method according to Claim 1 or 2, wherein the oxidative gas is oxygen and carbon dioxide, and the additive gas in which the sum of the concentration of the carbon dioxide and two-fold of the concentration of the oxygen is 4% to 20% by volume is used. the sum of the concentration of the carbon dioxide and two-fold of the concentration of the oxygen is 4% to 20% by volume is used.

6. A welding torch for consumable electrode-based gas-shielded arc welding, the welding torch comprising:
a case;
a tip body that is provided inside the case;
a tip that is connected to an end part of the tip body; and
a nozzle that surrounds the tip,
wherein a space is provided between the case and the tip body, the end part of the space forms a blast nozzle for a shielding gas, and a plurality of blast pores for an additive gas are provided radially around the end part of the case and inside the nozzle.
